# EUROPEAN PATENT SPECIFICATION

(11) **EP 3 144 132 B1**
(45) Date of publication and mention of the grant of the patent: **03.04.2019**
(21) Application number: 16189327.6
(22) Date of filing: 16.09.2016
(51) Int. Cl.: B29D 30/46, B26D 1/18, B26D 1/20, B26D 7/02

(54) **AUTOMATIC DEVICE FOR THE TRANSVERSE CUT OF REINFORCED RUBBER COATED WEBS**
AUTOMATISCHE VORRICHTUNG ZUM QUERSCHNEIDEN VON VERSTÄRKTEN GUMMIBAHNEN
DISPOSITIF AUTOMATIQUE POUR LA COUPE TRANSVERSALE DE BANDES EN CAOUTCHOUC RENFORCÉES

(30) Priority: 21.09.2015 IT UB20153772
(43) Date of publication of application: 22.03.2017
(73) Proprietor: Comerio Ercole S.p.A., 21052 Busto Arsizio (Varese) (IT)
(72) Inventor: SACCHI, Mario, 20010 S. Giorgio su Legnano MI (IT)
(74) Representative: Pizzoli, Antonio

(56) References cited:
- WO-A1-2014/155258
- DE-A1- 2 318 096
- FR-A- 1 339 391
- GB-A- 882 503
- JP-A- H11 291 362
- US-A- 4 478 376
- US-A- 4 596 617
- US-A- 4 608 890
- US-A- 4 844 768
- US-A- 4 922 774
- US-A- 5 273 601
- US-A- 5 626 706
- US-A1- 2015 122 096
- US-B1- 6 315 229

## Description

The present invention generally relates to the manufacturing of semifinished multilayer comprising pairs of rubber layers between which a plurality of metal wires or webs of textile material are arranged. More particularly, the invention relates to an automatic system for the transverse cut of a semifinished multilayer to be wound around a reel once it reaches a predetermined winding length. The invention also relates to a method for the transverse cut of a semifinished multilayer and to a manufacturing line comprising the automatic cutting device.

In the manufacturing of semifinished multilayers made of rubber or other elastomeric materials reinforced with metal wires and/or high strength textile material webs, which are mainly used in the manufacturing of motor vehicles tires and are also known as "cord", manufacturing lines are commonly employed wherein rubber bands are laminated with metal wires and/or webs by way of special calenders provided with pairs of counter-rotating cylinders having parallel axes. The calenders are provided with heating elements, temperature sensors, as well as with systems for adjusting the temperature of the cylinder surfaces. The rubber bands, metal wires and/or webs are continuously fed to a lamination gap defined between one or more pairs of the calender cylinders, the height of which may be adjusted by acting on a movable cylinder of the pair.

Also known are lamination apparatuses wherein the layers intended to form a semifinished multilayer are fed along respective converging paths, superimposed and pressed by suitable coupling rolls arranged along these paths so as to form a semifinished multilayer. These apparatuses further comprise a shaping cylinder on which the semifinished multilayer is transferred and wound.

An example of a lamination apparatus of this type is described in patent US 5626706. In this apparatus a first layer and a second layer made of different materials are coupled and carried on a conveyor belt, while a third layer made of a further material is fed from a suitable frame arranged above the conveyor belt and coupled with the first layer and the second layer by a pressing roll restrained to a rotatable arm. The multilayer so obtained is received on a second conveyor belt arranged below the conveyor belt. The second conveyor belt is movable to a from a shaping cylinder of the apparatus so as to allow to transfer and progressively wind thereon the multilayer.

In order to cut the layers forming a multilayer in a transverse direction the apparatus comprises a first cutting unit associated with an anvil arranged along the frame located above the conveyor belt.

The patent publication JP 2006130735 describes a lamination apparatus similar to the apparatus above. Reference is also made to JPH 11291362-A, which discloses a cutting device for a manufacturing line of semifinished multilayer products comprising pairs of rubber layers between which a plurality of metal cords or fabric webs are arranged, said cutting device comprising a cutting unit movable along guide rails and a first conveyor belt that is arranged under said cutting unit in a vertical direction, and a guiding cylinder and a blocking cylinder arranged at an outlet end of the conveyor, wherein said blocking cylinder is movable along a straight direction to and from the guiding cylinder.

A semifinished multilayer coming out from a calender, and more generally from a manufacturing line, is progressively wound on a reel of a winding device so as to form a roll from which portions of the semifinished multilayer having a desired length will be cut for manufacturing purposes. During winding, the multilayer semifinished product is fed towards the winding device together with a coil separation film made of a non-stick material, for example polyester, in order to prevent superimposed layers of uncured and thus sticky rubber from contacting each other when forming the roll coils.

Once reached a predetermined winding length, it is necessary to cut the semifinished multilayer. To this aim, a cutting device is installed upstream of the winding device with respect to a feeding direction of the semifinished multilayer.

Known cutting devices allow to perform cuts of the semifinished multilayer perpendicularly to the feeding direction, as well as along incident directions according to variable angles ranging between 30° and 90°. Cutting according to incident directions with respect to the feeding direction allows to reduce scraps of the rubber cord intended for the manufacturing of crossed plies in tires. In fact it is known that cuts made in these semifinished products perpendicularly to the feeding direction cause the loss of the initial and final parts of a roll.

Prior art cutting devices allowing to cut according to different angles do not allow to ensure an adequate level of precision and straightness of the cuts, which makes it necessary to make a second, "heading cut" at a later stage when preparing the webs and results in a waste of material.

Another problem of prior art cutting devices, and more generally of the manufacturing lines that employ such cutting devices, is that they require several manual interventions of operators for the drawing-in a multilayer at the beginning of every new winding step, as well as when taking samples of the multilayer in-line, which requires to perform two consecutive cuts in the feeding direction.

There is therefore a need to improve prior art cutting devices so as to solve the technical problems mentioned above, which is an object of the present invention. Said object is achieved with an automatic transverse cutting device and a manufacturing line that includes the automatic transverse cutting device, whose main features are specified in claims 1 and 6, respectively, while other features are specified in the remaining claims.

An idea of solution underlying the invention is to provide a cutting device comprising a cutting unit operating according to a variable cutting angle and movable along guide rails, a conveyor belt arranged under the cutting unit and associated with a pair of cylinders comprising a guiding cylinder and blocking cylinder of the multilayer, wherein these cylinders are arranged at an outlet end of the cutting device intended to face the winding assembly of a manufacturing line. The guiding cylinder is rotatably restrained to an arm pivoted about an axis transverse to the conveyor belt and the blocking cylinder is movable to and from the guiding cylinder along a straight line.

Thanks to the provision of the pair of cylinders comprising a guiding cylinder and a blocking cylinder of the multilayer associated with the conveyor belt it is possible to tighten the multilayer before carrying out cutting operations, which allows to perform straight cuts that are much more precise than those obtainable by employing prior art cutting devices.

The cutting device according to the invention may also advantageously comprise a second conveyor belt arranged under the conveyor belt and movable between a rest position, wherein it does not interact with the multilayer, and an operating position, wherein it cooperates with the conveyor belt in order to carry out drawing-in operations of the multilayer on a new reel, in-line sampling operations, as well as discarding operations of multilayer scraps.

Thanks to the use of two conveyor belts, it is possible to carry out in a completely automatic manner and in line not only cutting operations, but also the drawing-in and sampling operations, as well as discarding operations of scraps of a multilayer semifinished product, which enhances safety for the operators and allows to minimize errors and defects in the finished reels.

Further advantages and features of the automatic cutting device and the related cutting method according to the present invention will become clear to those skilled in the art from the following detailed and non-limiting disclosure of embodiments thereof with reference to the accompanying drawings, in which:
- Figures 1 to 6 show subsequent cutting steps carried out in a manufacturing line of rubber cord comprising an automatic cutting device according to the present invention;
- Figures 7 to 12 show subsequent steps of in-line sampling of rubber cord carried out in a manufacturing line of rubber cord comprising an automatic cutting device according to the present invention.

The figures show a final part of a manufacturing line of rubber cords, wherein a semifinished multilayer 100 coming out from a calender (not shown) is received in a drawing group 200. The feeding direction of the multilayer 100 is indicated by an arrow F. The drawing group 200 is made up of a number of motorized cylinders, for example, three cylinders 201, 202, 203 in the illustrated example, which are driven by a gear motor (not shown) and exert a pulling force on the semifinished multilayer 100 so as to tighten it and bring it towards a winding group 300 arranged downstream with respect to the feeding direction F.

The configuration of the final part of the manufacturing line is such that the winding group 300 is spaced from the drawing group 200 in a horizontal direction H and below it with respect to a vertical direction V, perpendicular to the horizontal direction H.

The drawing group 200 and the winding group 300 are controlled by a programmable logic controller of the manufacturing line, hereinafter also indicated with the acronym PLC (Programmable Logic Controller), which sets the drawing velocity, controls the torque and other operating parameters. The drawing group 200 comprises in known manner a blocking cylinder 204 movable to and from one of the motorized cylinders, cylinder 203 in the illustrated example, so as to selectively lock the multilayer 100 during a cutting step.

The winding group 300 comprises in a known manner two interchangeable winding units 310 with respective reels 311, used alternatively so as to ensure continuity of production. The winding unit 310 may be for example arranged on a platform 320 configured to be shifted perpendicularly to a center line of the manufacturing line in order to quickly arranged a new, empty reel in a winding position and to bring a wound roll to a discharge position. Alternative arrangements of the winding unit 310 are also known, for example disposed at fixed positions aligned on the center line of the manufacturing line.

The winding group 300 also comprises in a known manner for each winding device a feeding set configured to supply during the winding step a coil separation film 400 made of a non-stick material towards the reel schematically indicated with reference number 311. The feeding set comprises a roll of a coil separation film 400 rotatably supported by a first unwinding support 312 and a plurality of guide rollers 313 mounted on a second support 314. The arrows in the figures show the direction along which the coil separation film 400 is fed to the reel 311.

As shown in the figures, the guide rollers 313 are arranged higher than the reel 311 around which the multilayer 100 is wound, as well as higher than the roll of coil separation film 400. Thanks to this configuration, the coil separation film 400 proceeds downwards towards the reel 311, which allows to exploit the weight of the semifinished multilayer 100 in order to automatically complete winding of the multilayer on the reels, drawing-in of the multilayer on new reels, as well as in-line sampling and discarding operations of the multilayer, as it will be clarified in the following.

The cutting device, indicated generally by reference number 500, is arranged between the drawing group 200 and the winding group 300.

The cutting device 500 comprises a cutting unit 510 and a conveyor belt 520 arranged under the cutting unit in the vertical direction V. The conveyor belt 520 stretches out in the horizontal direction H and is slightly inclined downwards in the vertical direction V.

The cutting device 500 may also advantageously comprise a second conveyor belt 530 arranged under the conveyor belt 520 in the vertical direction V and configured to allow in-line sampling and discarding operations of the semifinished multilayer 100, as it will be explained in greater detail in the following.

The cutting unit 510 comprises in a known manner a motorized circular blade which acts on a fixed or motorized counter-blade (not shown), and is movable along linear guides 511. When being moved, the circular blade of the cutting unit is rotated so as to cut the product. The cutting unit 510 and the guides 511 are mounted on a movable frame pivoted on one side and provided with a gear motor (not shown) on the other side, which allows to incline the cutting unit 510 relative to the feeding direction of the multilayer 100. The inclination angle of the cutting unit 510 is the angle according to which a cut on the multilayer 100 is made. The angle of inclination is controlled by way of a position sensor placed on the frame, which sends a reference signal to the PLC which in turn controls the gear motor that drives the movable frame.

The conveyor belt 520 has one end arranged at an outlet of the drawing group 200 and stretches out toward the winding group 300. As mentioned above, the conveyor belt 520 is also inclined downwards with respect to the vertical direction V so as to allow to space apart cut edges of the multilayer 100 in order to prevent their mutual contact and possible bonding caused by a partial overlapping of the respective rubber layers, which are not cured and are therefore rather sticky. At an outlet end facing the winding group 300, the conveyor belt 520 is associated with a pair of cylinders 521, 522, in particular a guiding cylinder 521 configured to guide the multilayer 100 during the various cutting steps and a blocking cylinder 522 configured to selectively block the multilayer 100 on the guiding cylinder 521 during cutting operations, as it will be described in the following.

In the illustrated embodiment, the guiding cylinder 521 is restrained to an arm rotatable around a transverse axis perpendicular to the horizontal direction H and to the vertical direction V. The blocking cylinder 522 is instead movable to and from the driving cylinder 521 along a straight line.

The second conveyor belt 530 of the cutting device 500 is arranged under the conveyor belt 520 in the vertical direction V and is movable relative thereto in the horizontal direction H between a rest position and an operating position. In the rest position the second conveyor belt 530 is arranged completely under the conveyor belt 520, i.e. it does not protrude beyond the latter in the horizontal direction H, while in the operative position one end of the second conveyor belt 530 is arranged beyond the outlet end of the conveyor belt 520 in the horizontal direction H. As it will be described in the following, in the operative position the second conveyor belt 530 is advantageously employed in drawing-in operations of the multilayer 100 when starting and ending winding on a reel. Moreover, the main function of the second conveyor belt 530 is to receive samples and scraps of the multilayer 100.

As it may be seen in the figures, the second conveyor belt 530 is preferably inclined downwards in the vertical direction V, which facilitates sampling and discarding operations of the multilayer 100, as will be clarified in the following.

During production, the drawing group 200 and the winding group 300 are operated at a nominal velocity of the manufacturing line, which is controlled by the PLC. The cutting unit 510 is set at a predetermined angle so as to make cuts at a desired angle.

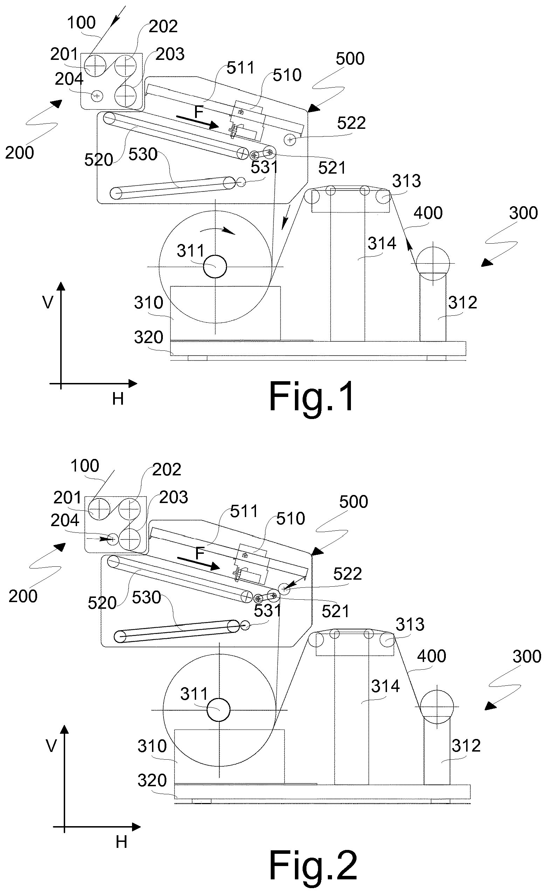

Now referring now to figures 1 to 6, subsequent cutting steps of the multilayer 100 will be described.

As shown in figure 1, the multilayer 100 proceeds along the feeding direction F parallel to the conveyor belt 520 and spaced therefrom vertically and tightened between the rollers of the drawing group 200 and the guiding cylinder 521 of the conveyor belt 520. At the outlet end of the belt conveyor belt 520 the multilayer 100, guided by the guiding cylinder 521, proceeds substantially vertically toward the underlying reel 311 of the winding unit 310 around which it is wound together with the coil separation film 400 made of a non-stick material.

When reaching the required length of the multilayer wound on the reel 311, the motors of the drawing group 200 and of the winding group 300 are stopped. As shown in figure 2, the multilayer 100 is clamped at a first point in the drawing group 200 from the blocking cylinder 204, and at a second point downstream to the cutting unit 510 with respect to the feeding direction F by the blocking cylinder 522 of the cutting device 500, the blocking cylinders 204 and 522 respectively acting on the motorized cylinder 203 of the drawing group 200 and on the guiding cylinder 521 of the cutting device 500.

Thanks to this sequence of operations, the multilayer portion 100 is perfectly pulled between the two clamping points described above, which allows to cut it with a high degree of accuracy and straightness.

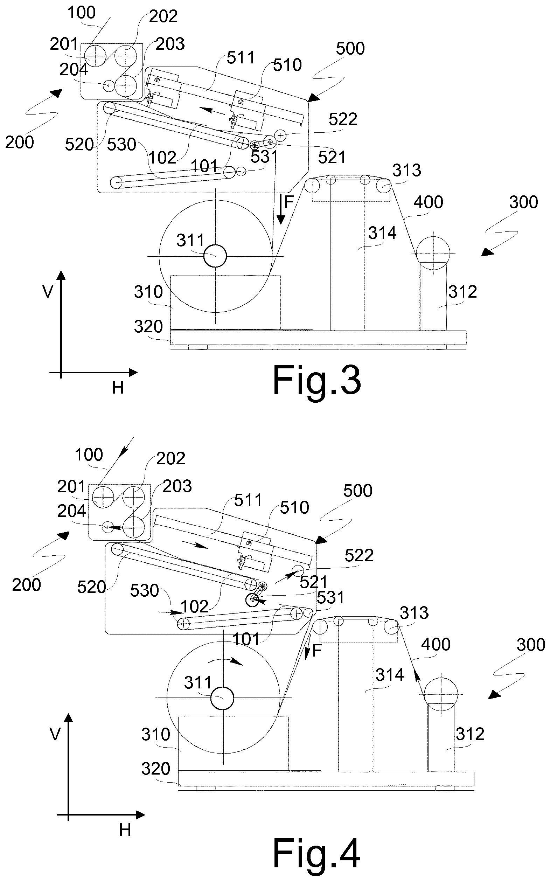

As shown in figure 3, when being moved along the guides 511, the cutting unit 510 performs cutting of the multilayer 100 according to the previously set angle. After cutting, the two portions of the multilayer 100, schematically indicated by reference numbers 101, 102, fall by gravity on the conveyor belt 520 and are mutually spaced apart thanks to its downward inclination.

As shown in figure 4, with respect to the feeding direction F, the upstream portion 102, i.e. the leading edge intended to form the initial part of a new reel, remains on the conveyor belt 520 blocked by the drawing group 200, whereas the downstream portion 101, i.e. the tail end intended to form the final part of the multilayer 100 wound on the reel, is pulled and progressively wound on the reel at a low velocity, i.e. at a velocity lower than the nominal winding velocity.

When winding the tail end 101 the second conveyor belt 530 may advantageously be used.

More particularly, as shown in figure 4, the second conveyor belt 530 of the cutting device 500 is made to advance toward the outlet end of the conveyor belt 520 and partially beyond it in the horizontal direction, thus approaching the descending portion of the coil separation film 400 disposed between the guide rollers 313 and the reel 311. In this way, as clearly shown in figure 4, the second conveyor belt 530 receives the tail end 101 of the semifinished multilayer 100 from the outlet end of the conveyor belt 520. The tail end 101 contacts the second conveyor belt 530. In order to facilitate movement of the tail end 101, the second conveyor belt 530 may advantageously be provided with an auxiliary cylinder 531 arranged at the end facing the outlet end of the conveyor belt 520 and hence also the winding group 300.

The tail end 101 is also advantageously brought toward the second conveyor belt 530 and its auxiliary cylinder 531 by the guiding cylinder 521 of the conveyor belt 520, which, in the illustrated example, rotates clockwise downwards thus being arranged below its outlet end.

These two operations allow to bring the tail end 101 of the multilayer 100 toward the reel 311 more easily, while preventing possible jamming and deformation thereof, because the tail end is substantially brought onto the portion of the coil separation film 400 descending toward the reel 311. After passage of the tail end 101, the second conveyor belt 530 is moved in the horizontal direction H in the opposite direction and returned to the rest position, wherein it no longer interferes with the winding path of the semifinished multilayer 100.

After these operations, which are carried out in a fully automatic way thanks to the interaction between the cutting unit 510 and the conveyor belt 520 of the cutting device 500, together with the possible contribution of the second conveyor belt 530, the finished roll wound on the reel 311 is removed from the manufacturing line by shifting the movable platform 320 transversely thereto, i.e. perpendicularly to the horizontal and vertical directions H, V. As explained above, in this operation a new reel 311 driven by a respective winding unit 310 is brought inline and associated with a corresponding set supply assembly of a coil separation film 400 for the winding of a new reel.

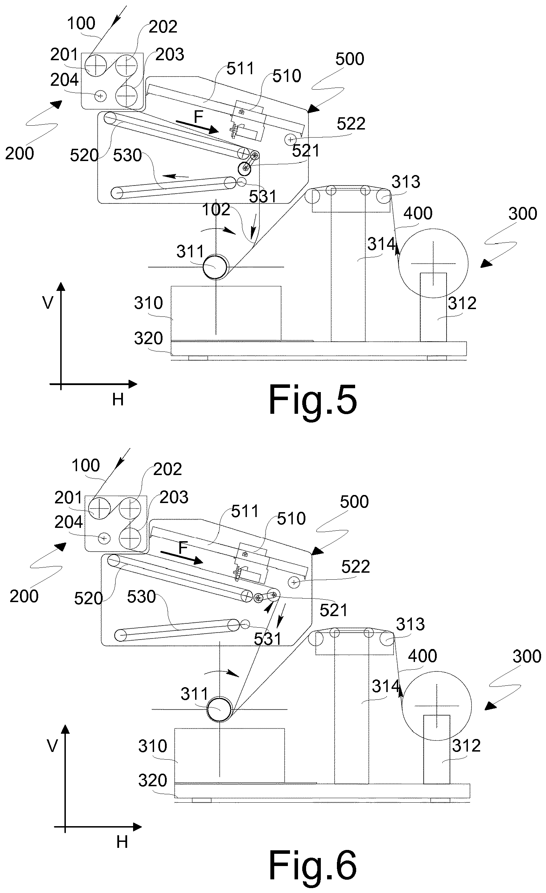

As shown in figure 5, the leading end 102 of the multilayer 100, which is intended to form the initial part of a new roll is made to advance at a low velocity by the drawing group 200 and by the conveyor belt 520. The leading end 102 proceeds vertically due to its own weight until it reaches the portion of the coil separation film 400 already engaged with the reel 311 and acting as a pulling means. During this step the guiding cylinder 521 is kept rotated downward under the conveyor belt 520 so as to facilitate the descent of the leading end 102 of the multilayer 100 toward the reel 311.

A new winding step of the multilayer 100 may thus begin in a completely automatic way. Before restoring the nominal feeding velocity of the manufacturing line, the guiding cylinder 521 of the conveyor belt 520 is raised again, more particularly rotated upwards counterclockwise, and hence positioned in order to space the multilayer 100 away from the conveyor belt 520 and hold it in this position until a new cutting operation.

Figure 6 shows the new operating configuration so achieved.

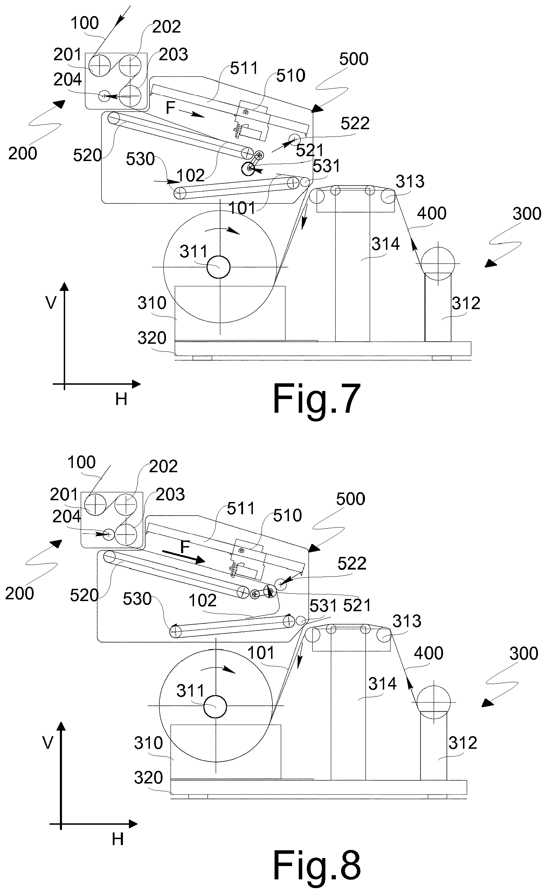

As anticipated above, the main function of the second conveyor belt 530 is to allow in-line sampling and discarding operations of the semifinished multilayer 100. Now referring to figures 7 to 12, subsequent in-line sampling and discarding steps of scraps of the semifinished multilayer 100 will be described.

It is known that, in order to take samples of the semifinished multilayer 100 in-line, or in order to discard a defective portion thereof, it is necessary to make a first cut as described above with reference to figures 2 to 4 and then a second, subsequent cut.

To this aim, as shown in figures 7 and 8, the after the tail end 101 has been wound on the reel the second conveyor belt 530 is made to advance in the horizontal direction H beyond the outlet end of the conveyor belt 520 and the leading end 102 of the multilayer 100 is made to advance for a predetermined distance beyond the outlet end of the conveyor belt 520, thus falling on the second, underlying conveyor belt 530. As shown in figure 8, in this step the second conveyor belt 530 circulates in a direction opposite to the conveyor belt 520, i.e. in a direction leading away from the winding group 300, so as to allow discharge of samples and scraps of the semifinished multilayer 100 from the manufacturing line.

As shown in figure 8, the guiding cylinder 521 of the conveyor belt 520 is raised in order to remove the multilayer 100 therefrom and the blocking cylinder 522 is pressed on the driving cylinder 521 in order to block the multilayer 100 in place.

The drawing group 200 operates the motorized cylinders at a low velocity in a direction opposite to the feeding direction, thus pulling the multilayer 100. Once finished this operation, the blocking cylinder 204 of the drawing group 200 is pressed against the motorized cylinder 203 thus blocking the multilayer 100 so tightened.

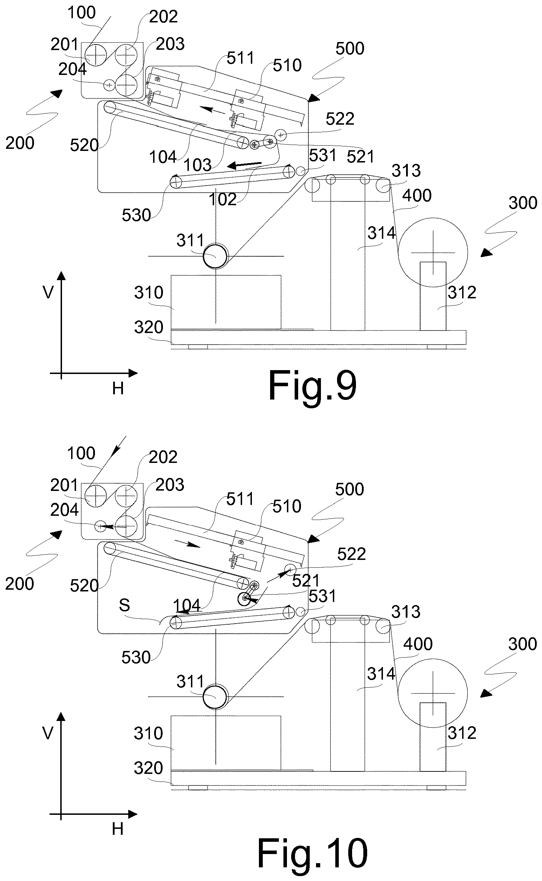

As shown in figure 9, the cutting unit 510 can thus make a second cut similarly to the first cut. Two new end portions are thus obtained, schematically indicated with reference numbers 103, 104. The first portion 103 forms the tail end of the sample or scrap S, while the second portion 104 is intended to constitute the leading edge part or head of a new roll.

Now referring to figure 10, the blocking cylinder 522 is opened and the motorized guiding cylinder 521 is rotated under the conveyor belt 520 so as to allow to discharge of the sample or scrap S of the multilayer 100 from the manufacturing line by means of the second conveyor belt 530.

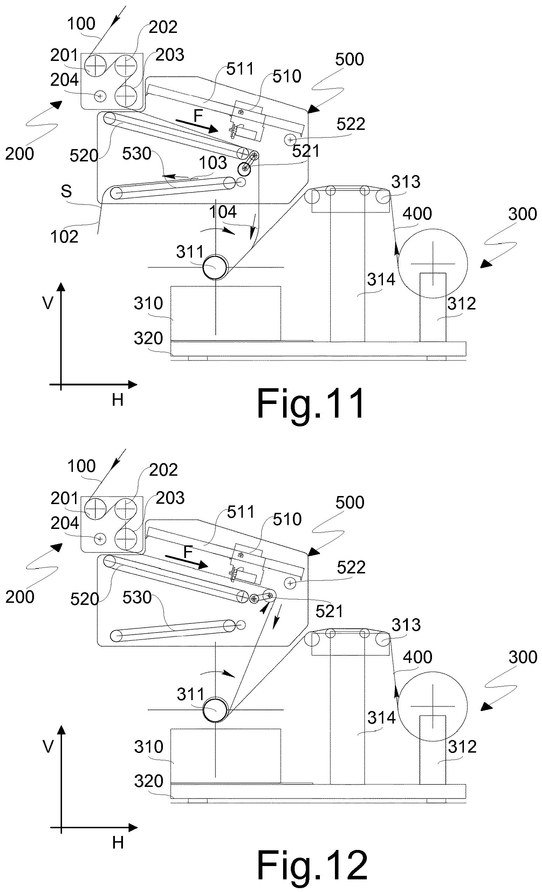

As shown in figures 11 and 12, similarly to what has been described above with reference to figures 5 and 6, which illustrate the cutting and drawing-in steps of a new roll, the leading edge 104 is caused to advance at slow velocity by the drawing group 200 and by the conveyor belt 520, and is brought toward the reel 311 from the coil separation film 400 that is already engaged with the winding device. The guiding cylinder 521 is then repositioned above the conveyor belt 520 as described above and the normal production cycle can be resumed.

It will be appreciated that thanks to these features, sampling operations of a multilayer 100 and discarding of its defective portions can take place in line in a completely automatic way, thus allowing to resume a production cycle automatically and safely.

It will also be appreciated that the in-line sampling operations of the multilayer can be carried out quickly and accurately for each wound reel.

The present invention has been disclosed with reference to preferred embodiments. It will be understood that there may be further embodiments based on the same inventive idea, as defined by the scope of protection of the claims set out below.

## Claims

1. A cutting device (500) for a manufacturing line of semifinished multilayer products comprising pairs of rubber layers between which a plurality of metal cords or fabric webs are arranged, said cutting device (500) comprising a cutting unit (510) with variable cutting angle that is movable along guide rails and a conveyor belt (520) that stretches out in a horizontal direction (H), is inclined downwards relative to a vertical direction (V) and is arranged under said cutting unit (510) in said vertical direction (V), said conveyor belt (520) being associated with a guiding cylinder (521) and a blocking cylinder (522) arranged at an outlet end thereof, wherein said guiding cylinder (521) is restrained to a rotatable arm pivoted about a transverse axis perpendicular to said horizontal and vertical directions (H, V) and is configured to guide a semifinished multilayer (100) during cutting operations and wherein said blocking cylinder (522) is movable along a straight direction to and from the guiding cylinder (521) and is configured to selectively block said semifinished multilayer (100) on the guiding cylinder (521) during said cutting operations.

2. A cutting device (500) according to claim 1, further comprising a second conveyor belt (530), said second conveyor belt (530) being arranged under said conveyor belt (520) in said vertical direction (V), the second conveyor belt (530) being movable relative to the conveyor belt (520) along a horizontal direction (H), perpendicular to the vertical direction (V), between a rest position wherein it is completely under the conveyor belt (520) and an operative position wherein a portion thereof is arranged beyond the outlet end of the conveyor belt (520) in said horizontal direction (H).

3. A cutting device (500) according to claim 2, wherein the second conveyor belt (530) is inclined downwards relative to the vertical direction (V).

4. A cutting device (500) according to any one of claims 1 to 3, wherein the second conveyor belt (530) comprises an auxiliary cylinder (531) arranged at the end thereof facing the outlet end of the conveyor belt (520).

5. A cutting device (500) according to any one of claims 1 to 4, wherein said cutting unit (510) is of the type comprising a motorized circular blade and a fixed or motorized counter-blade.

6. A line for the manufacturing of semifinished multilayer products comprising pairs of rubber layers between which a plurality of metal cords or fabric webs are arranged, said manufacturing line comprising a drawing group (200) configured to receive and draw a multilayer product (100) and a winding group (300) spaced from said drawing group (200) in a horizontal direction (H) and arranged under it with respect to a vertical direction (V), perpendicular to said horizontal direction (H), said manufacturing line further comprising a cutting device arranged between said drawing group (200) and winding group (300), said cutting device being a device (500) according to any one of claims 1 to 5.

7. A manufacturing line according to claim 6, wherein the drawing group (200) comprises a plurality of motorized drawing cylinders (201, 202, 203) and a blocking cylinder (204) movable to and from any one of said motorized cylinders (201, 202, 203).

8. A manufacturing line according to claim 6 or 7, wherein the winding group (300) comprises two interchangeable winding units (310) with related reels (311), each winding unit (310) being coupled to a feeding set for the feeding of a coil separation film (400), said feeding set comprising a roll of coil separation film (400) rotatably supported by a first unwinding support (312) and a plurality of guide rollers (313) mounted on a second support (314), said guide rollers (313) being arranged higher than the reel (311) and higher than the roll of coil separation film (400).

## Patentansprüche

1. Eine Schneidvorrichtung (500) für eine Fertigungslinie von halbfertigen, mehrlagigen Produkten, umfassend Paare von Gummischichten, zwischen welchen mehrere Metallstränge oder Gewebebahnen angeordnet sind, wobei die Schneidvorrichtung (500) eine entlang von Führungsschienen bewegbare Schneideinheit (510) mit variablem Schnittwinkel umfasst, sowie ein Förderband (520), das sich in einer horizontalen Richtung (H) erstreckt, relativ zu einer vertikalen Richtung (V) nach unten geneigt ist und in der besagten vertikalen Richtung (V) unterhalb der Schneideinheit (510) angeordnet ist, wobei dem Förderband (520) ein Führungszylinder (521) zugeordnet ist sowie ein an seinem Abgabeende angeordneter Blockierzylinder (522), wobei der besagte Führungszylinder (521) an einem drehbaren Arm festgehalten ist, der um eine transversale, zu den besagten, horizontalen und vertikalen Richtungen (H, V) rechtwinklige Achse drehbar gelagert und dazu ausgelegt ist, das halbfertige mehrlagige Produkt (100) während der Schneidvorgänge zu führen, und wobei der besagte Blockierzylinder (522) entlang einer geraden Richtung zu dem Führungszylinder (521) hin und von jenem weg bewegbar sowie dazu ausgelegt ist, um das besagte, halbfertige mehrlagige Produkt (100) auf dem Führungszylinder (521) während der besagten Schneidvorgänge selektiv zu blockieren.

2. Eine Schneidvorrichtung (500) gemäß Anspruch 1, ferner umfassend ein zweites Förderband (530), wobei das besagte zweite Förderband (530) in der besagten, vertikalen Richtung (V) unterhalb des besagten Förderbandes (520) angeordnet ist, wobei das zweite Förderband (530) gegenüber dem Förderband (520) entlang einer horizontalen Richtung (H) rechtwinklig zu der vertikalen Richtung (V) bewegbar ist zwischen einer Ruheposition, in welcher es sich komplett unterhalb des Förderbandes (520) befindet, und einer Arbeitsposition, in welcher sich ein Bereich desselben in der besagten horizontalen Richtung (H) über das Abgabeende des Förderbands (520) hinaus erstreckt.

3. Eine Schneidvorrichtung (500) gemäß Anspruch 2, wobei das zweite Förderband (539) relativ zu der vertikalen Richtung (V) nach unten geneigt ist.

4. Eine Schneidvorrichtung (500) gemäß einem der Ansprüche 1 bis 3, wobei das zweite Förderband (530) einen Hilfszylinder (531) aufweist, der an dessen dem Abgabeende des Förderbands (520) zugewandten Ende angeordnet ist.

5. Eine Schneidvorrichtung (500) gemäß einem der Ansprüche 1 bis 4, wobei die Schneideinheit (510) von derjenigen Bauart ist, welche ein motorbetriebenes Rundmesser und ein festgelegtes oder motorbetriebenes Gegenmesser aufweist.

6. Eine Linie zur Fertigung von halbfertigen, mehrlagigen Produkten, umfassend Paare von Gummischichten, zwischen welchen eine Mehrzahl von Metallsträngen oder Gewebenetzen angeordnet ist, wobei die besagte Fertigungslinie eine Ziehgruppe (200) umfasst, welche dazu ausgelegt ist, ein mehrlagiges Produkt (100) aufzunehmen und zu ziehen, sowie eine Wickeleinheit (300), die von der besagten Ziehgruppe (200) in einer horizontalen Richtung (H) beabstandet und im Hinblick auf eine vertikale Richtung (V) unterhalb jener angeordnet ist, rechtwinklig zu der besagten horizontalen Richtung (H), wobei die besagte Fertigungslinie ferner eine Schneidvorrichtung umfasst, die zwischen der besagten Ziehgruppe (200) und der Wickeleinheit (300) angeordnet ist, wobei die besagte Schneidvorrichtung eine Vorrichtung (500) nach einem der Ansprüche von 1 bis 5 ist.

7. Eine Fertigungslinie gemäß Anspruch 6, wobei die Ziehgruppe (200) eine Mehrzahl von motorbetriebenen Zugzylindern (201, 202, 203) umfasst sowie einen Blockierzylinder (204), der zu irgendeinem der besagten motorbetriebenen Zylindern (201, 202, 203) hin und von jenem weg bewegbar ist.

8. Eine Fertigungslinie gemäß Anspruch 6 oer 7, wobei die Wickelgruppe (300) zwei auswechselbare Wickeleinheiten (310) mit zugeordneten Spulen (311) aufweist, wobei jede Wickeleinheit (310) an einen Zuführsatz für die Zufuhr einer Trennfolien-Wicklung (400) gekoppelt ist, wobei der besagte Zuführsatz eine Spule der aufgewickelten Trennfolie (400) umfasst, die drehbar unterstützt wird von einer ersten Abwickel-Halterung (312) sowie von einer Mehrzahl von Führungsrollen (313), die an einer zweiten Halterung (314) gelagert sind, wobei die besagten Führungsrollen (313) höher angeordnet sind als die Spule (311) sowie höher als die Spule der aufgewickelten Trennfolie (400).

## Revendications

1. Dispositif de coupe (500) pour une ligne de fabrication de produits multicouches semi-finis comprenant des paires de couches de caoutchouc entre lesquelles une pluralité de cordes métalliques ou de bandes en tissu sont agencées, ledit dispositif de coupe (500) comprenant une unité de coupe (510) avec un angle de coupe variable qui est mobile le long de rails de guidage et d'une courroie transporteuse (520) qui s'étire dans une direction horizontale (H), est inclinée vers le bas par rapport à une direction verticale (V) et est agencée sous ladite unité de coupe (510) dans ladite direction verticale (V), ladite courroie transporteuse (520) étant associée à un cylindre de guidage (521) et un cylindre de blocage (522) agencé au niveau de son extrémité de sortie, dans lequel ledit cylindre de guidage (521) est retenu sur un bras rotatif pivoté autour d'un axe transversal perpendiculaire auxdites directions horizontale et verticale (H, V) et est configuré pour guider une multicouche semi-finie (100) pendant les opérations de coupe et dans lequel ledit cylindre de blocage (522) est mobile le long d'une direction droite vers et depuis le cylindre de guidage (521) et est configurée pour bloquer sélectivement ladite multicouche semi-finie (100) sur le cylindre de guidage (521) pendant lesdites opérations de coupe.

2. Dispositif de coupe (500) selon la revendication 1, comprenant en outre une seconde courroie transporteuse (530), ladite seconde courroie transporteuse (530) étant agencée sous ladite courroie transporteuse (520) dans ladite direction verticale (V), la seconde courroie transporteuse (530) étant mobile par rapport à la courroie transporteuse (520) le long d'une direction horizontale (H), perpendiculaire à ladite direction verticale (V), entre une position de repos dans laquelle elle est complètement au-dessus de la courroie transporteuse (520) et une position opérationnelle dans laquelle sa partie est agencée au-delà de l'extrémité de sortie de la courroie transporteuse (520) dans ladite direction horizontale (H).

3. Dispositif de coupe (500) selon la revendication 2, dans lequel la seconde courroie transporteuse (530) est inclinée vers le bas par rapport à la direction verticale (V).

4. Dispositif de coupe (500) selon l'une quelconque des revendications 1 à 3, dans lequel la seconde courroie transporteuse (530) comprend un cylindre auxiliaire (531) agencé au niveau de son extrémité orientée vers l'extrémité de sortie de la courroie transporteuse (520).

5. Dispositif de coupe (500) selon l'une quelconque des revendications 1 à 4, dans lequel ladite unité de coupe (510) est du type comprenant une lame circulaire motorisée et une lame antagoniste fixe ou motorisée.

6. Ligne pour la fabrication de produits multicouches semi-finis comprenant des paires de couches de caoutchouc entre lesquelles une pluralité de cordes métalliques ou de bandes de tissu sont agencées, ladite ligne de fabrication comprenant un groupe d'aspiration (200) configuré pour recevoir et aspirer un produit multicouche (100) et un groupe d'enroulement (300) espacé dudit groupe d'aspiration (200) dans une direction horizontale (H) et agencé sous ce dernier par rapport à une direction verticale (V) perpendiculaire à ladite direction horizontale (H), ladite ligne de fabrication comprenant en outre un dispositif de coupe agencé entre ledit groupe d'aspiration (200) et le groupe d'enroulement (300), ledit dispositif de coupe étant un dispositif (500) selon l'une quelconque des revendications 1 à 5.

7. Ligne de fabrication selon la revendication 6, dans lequel le groupe d'aspiration (200) comprend une pluralité de cylindres d'aspiration motorisés (201, 202, 203) et un cylindre de blocage (204) mobile vers et depuis l'un quelconque desdits cylindres motorisés (201, 202, 203).

8. Ligne de fabrication selon la revendication 6 ou 7, dans lequel le groupe d'enroulement (300) comprend deux unités d'enroulement (310) interchangeables avec des dévidoirs (311) relatifs, chaque unité d'enroulement (310) étant couplée à un ensemble d'alimentation pour l'alimentation d'un film de séparation de bobine (400), ledit ensemble d'alimentation comprenant un rouleau de film de séparation de bobine (400) supporté, en rotation, par un premier support de déroulement (312) et une pluralité de rouleaux de guidage (313) montés sur un second support (314), lesdits rouleaux de guidage (313) étant agencés plus haut que le dévidoir (311) et plus haut que le rouleau de film de séparation de bobine (400).
